# EUROPÄISCHE PATENTSCHRIFT

(11) **EP 0 693 318 B1**
(45) Veröffentlichungstag und Bekanntmachung des Hinweises auf die Patenterteilung: **19.09.2001**
(21) Anmeldenummer: 95110380.3
(22) Anmeldetag: 04.07.1995
(51) Int. Cl.: B03D 1/14, D21F 1/70, B01F 5/04

(54) **Flotationseinrichtung**
Flotation device
Dispositif de flottaison

(30) Priorität: 22.07.1994 DE 4426159
(43) Veröffentlichungstag der Anmeldung: 24.01.1996
(73) Patentinhaber: Voith Sulzer Stoffaufbereitung GmbH, 88212 Ravensburg (DE)
(72) Erfinder: Trefz, Michael, Dr., D-89522 Heidenheim (DE); Martin, Thomas, D-89219 Langenau (DE); Dörflinger, Hans-Dieter, D-89518 Heidenheim (DE)
(74) Vertreter: Dr. Weitzel & Partner

(56) Entgegenhaltungen:
- EP-A- 0 581 196
- DE-A- 3 306 600
- DE-B- 2 738 782
- DE-C- 4 314 507
- US-A- 4 378 289
- US-A- 5 080 792

## Beschreibung

Die Erfindung betrifft eine Einrichtung zum selektiven Flotieren, insbesondere nach Druckfarben-Teilchengrößen, von Altpapier-Suspensionen. Eine solche Einrichtung ist praktisch bekannt aus DE 37 41 843 A1. Diese Schrift beschreibt eine Mischeinrichtung, die einer Flotationseinrichtung vorzuschalten ist, um die Flotationstrübe auf günstige Weise sehr innig mit Luftblasen zu vermischen, die so klein sind, daß sie sich für die Anlagerung von Schmutzteilchen, falls es sich z.B. um eine Altpapiersuspension handelt, die mit Druckfarben verunreinigt ist, eignen. Das Problem bei der Flotation, insbesondere von Altpapiersuspensionen, ist es, in möglichst wenig Stufen (Flotationszellen) eine möglichst weitgehende Abscheidung der Schmutzpartikel, insbesondere Druckfarbenpartikel, zu erreichen. Es ist schwierig, die Druckfarbenpartikel wegen ihres breiten Größenspektrums in genügend gleichem starken Maße abzuscheiden, weil dazu auch eine Vielzahl verschiedener Luftblasengrößen gehört. Der zunächst abgeschiedene Flotationsschaum, der im wesentlichen nur Schmutzpartikel enthalten sollte, führt auch erhebliche Fasermengen mit sich, so daß eine Flotationsanlage in einer Primärstufe zunächst die Trübe reinigt, während in einer Sekundärstufe der in der Primärstufe erzeugte Schaum weiterbehandelt wird, um die Papierfasern zurückzugewinnen.

DE-B 27 38 782 beschreibt einen Flotationszyklon, bei welchem die Strömung mit einer relativ geringen Beschleunigung aufsteigt. Die Reinigung der Fasersuspension von Schmutzpartikeln ist dabei nicht befriedigend. Zudem werden große Schmutzpartikel von den Luftblasen nicht mit transportiert.

DE-C 43 14 507 beschreibt einen Mischer, mit einander benachbarten Platten, welche Erhebungen aufweisen. Auch dieser Mischer hat sich bezüglich der Abscheidung von Schmutzpartikeln sowie der Durchsatzleistung nicht als befriedigend gezeigt.

Der Erfindung liegt die Aufgabe zugrunde, eine Flotationseinrichtung anzugeben, bei der gegenüber dem Stande der Technik eine bessere Reinigung der Faserstoffsuspension von Schmutzpartikeln erreicht wird, mit welcher sich auch große Schmutzpartikel abscheiden lassen, und die einen vergleichsweise hohen Durchsatz aufweist.

Diese Aufgabe wird durch die Merkmale von Anspruch 1 gelöst.

Nachfolgend wird die Erfindung anhand der Figuren der beigefügten Zeichnungen erläutert.

Dabei stellen im einzelnen dar:
- Figur 1: ein Prinzipschaltbild der gesamten Flotationsanordnung,
- Figur 2: einen Längsschnitt und
- Figur 2a: einen entsprechenden Querschnitt der statischen Mischeinrichtung,
- Figur 3: einen entsprechenden Querschnitt einer anderen Ausführungsform des statischen Mischers,
- Figur 3a: einen Längsschnitt durch eine weitere Ausführungsform eines statischen Mischers, bei welcher die Neigung der einzelnen Erhebungen in Strömungsrichtung stetig bzw. mehr und mehr zunimmt,
- Figur 4: eine ähnliche Ausführungsform des Mischers wie in Figur 1, jedoch mit anderer Zufuhreinrichtung,
- Figur 5: einen Axialschnitt durch einen bevorzugt ausgebildeten Flotationszyklon,
- Figur 6: einen ähnlichen Flotationszyklon in anderer Ausführung in Ansicht bzw. Teilaxialschnitt,
- Figur 7: eine Draufsicht auf den Zyklon nach Figur 6,
- Figuren 8a-f: weitere Ausführungsformen von Flotationszyklonen im Axialschnitt.

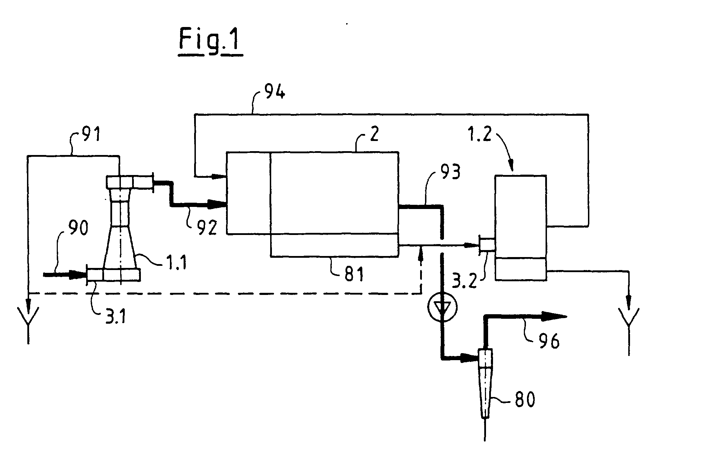

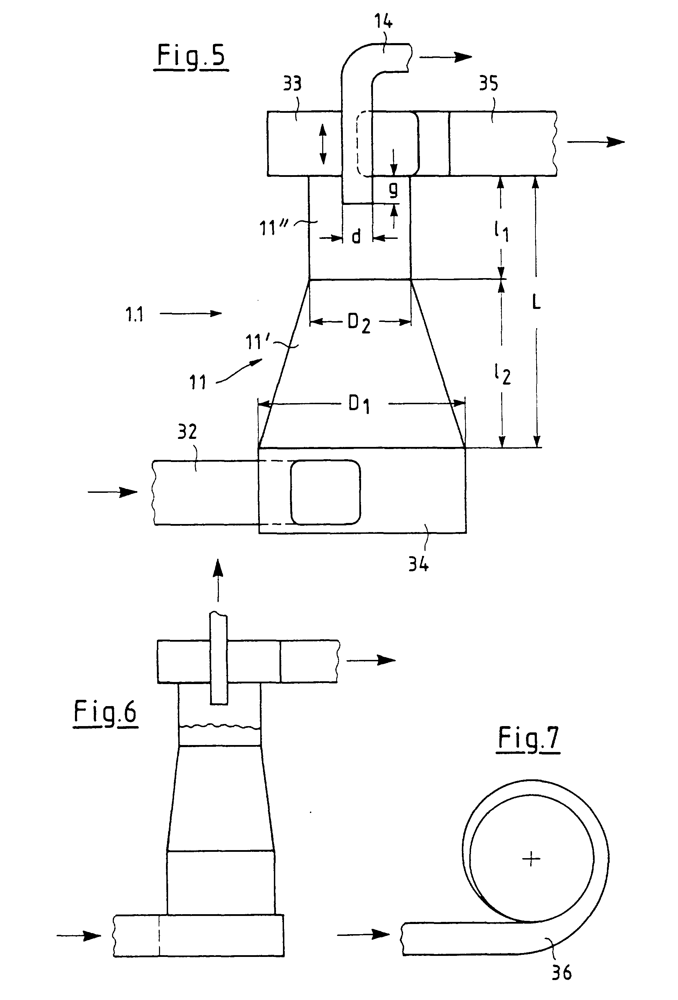

In Figur 1 ist mit 1.1 der Flotationszyklon der Primärstufe der Flotationsanlage, mit 2 die aus Flotationszellen herkömmlicher Bauart, die im wesentlichen allein aufgrund der Schwerkraft arbeiten, und mit 1.2 der Flotationszyklon der Sekundärstufe der Flotationsanlage beziffert. Die Hauptleitungen für die Flotationstrübe sind mit 90, 92, 93 und 96 bezeichnet. Die Flotationszellen der Flotationsmaschine 2 haben einen Aufbau wie in den eingangs genannten Veröffentlichungen angegeben. Sie weisen eine gemeinsame Schaumrinne 81 auf, in welche der Flotationsschaum hineinläuft. Dieser Flotationsschaum wird in der Sekundärflotationsmaschine, die hier als Kombination aus statischem Mischer und konventioneller Flotationszelle 1.2 ausgebildet ist, weiter gereinigt. Die Eingangsteile der Flotationszyklone 1.1 und 1.2 sind mit 3.1 bzw. 3.2 beziffert. Sie sind entsprechend einem statischen Mischer ausgebildet, der später noch beschrieben wird und in der eingangs genannten Schrift auch im einzelnen erläutert ist. Die Flotationszyklone haben ein zentrales Tauchrohr, das aus ihnen oben herausragt und hier nicht näher beschrieben ist, und die den abgezogenen Schaum den Abzugsleitungen 91 bzw. 95 zuführen. Dieses Tauchrohr ist in Figur 5 mit 14 bezeichnet und auch in Figur 6 angedeutet. Die Primärstufe der Flotationsanordnung besteht hier also aus dem Flotationszyklon 1.1 und der Flotationsmaschine 2 mit den Flotationszellen normaler Bauart, wobei hier der Flotationszyklon 1.1 der Flotationsmaschine 2 als erste Stufe der Flotation vorgeschaltet ist. Die gesamte Anlage führt durch ihre spezielle Ausbildung der einzelnen Bestandteile dazu, daß weniger Stufen für die Primärflotation benötigt werden, so z.B. nur insgesamt drei Stufen, wobei zwei Stufen auf die normalen Flotationszellen der Flotationsmaschine 2 entfallen. Dies wird dadurch insbesondere erreicht, daß der Flotationszyklon 1.1 einen hchen Abscheidewirkungsgrad hat, wobei jedoch hinzugefügt werden muß, daß ab einer bestimmten Teilchengröße der Schmutzpartikel, nämlich etwa 150 *µ*m, die Abscheidung in diesem Zyklon nicht mehr so gut ist, so daß für diese Teilchen die normalen Zellen der Flotationsmaschine 2 herangezogen werden.

Der Flotationszyklon arbeitet mit einer Radialbeschleunigung zwischen dem 5- und 100-fachen der Erdbeschleunigung. Der Mischeinrichtung 3.1 wird z.B. die Flotationstrübe mit einer Geschwindigkeit von etwa 6 m/s zugeführt, und sie gelangt dann in den Zyklon noch mit einer Geschwindigkeit von etwa 1,5 bis 2 m/s.

Sehr große Schmutzpartikel (etwa größer als 400 *µ*m) können durch die Flotation sehr schlecht abgeschieden werden, so daß hierfür ein Hydrozyklon 80 mit sehr großer Fliehkraft, wie sie die üblichen Hydrozyklone an sich oft aufweisen, eingesetzt wird.

Der über Leitung 91 aus dem Hydrozyklon 1.1 der Primärstufe abgezogene Schaum wird verworfen oder entsprechend der gestrichelten Linie der Sekundärstufe 1.2 zugeführt. Der über Leitung 95 aus der Sekundärstufe abgezogene Schaum wird dann verworfen. Der Gutstoff der Sekundärstufe wird über Leitung 94 vorzugsweise der Flotationsmaschine 2, also nach dem Flotationszyklon 1.1 der Primärstufe zugeführt. Das ist vernünftig, denn es geht ja hier hauptsächlich um die Abscheidung der größeren Schmutzpartikel. Man kann sagen, daß im Flotationszyklon 1.1 der Primärstufe alle diese Teilchen abgeschieden werden, die mit dem Bildanalysengerät nicht meßbar sind, aber im wesentlichen den Weißegrad stark beeinflussen. Durch diesen Kerngedanken der Erfindung wird es möglich, die Zahl der Flotationszellen insgesamt zu verringern, bzw. sehr klein zu halten. Dazu gehört natürlich auch eine entsprechend günstige Ausbildung des Flotationszyklons, wie später noch beschrieben wird.

Nachfolgend wird der statische Mischer 1.1 näher beschrieben. Es wird ein Mischer mit einem relativ flachen Kanal vorzugsweise verwendet, wobei durch Erhebungen der einander gegenüberliegenden breiten Wände des Kanals die starke Verwirbelung der Strömung und somit eine gute Durchmischung mit Luftblasen erreicht wird, wobei die Luftblasengröße auch relativ klein ist. Es ist günstig, die Erhebungen als Stege vorzusehen, deren Verlauf in Bezug auf die beiden einander gegenüberliegenden, die Stege tragenden Platten gekreuzt ist. Erfindungsgemäß werden nur wenige, z.B. zwei oder drei einander gegenüberliegende, zueinander parallele Platten verwendet. Dabei besteht ein erheblicher Abstand zwischen den Gruppen der Rippen oder Erhebungen der beiden Platten.

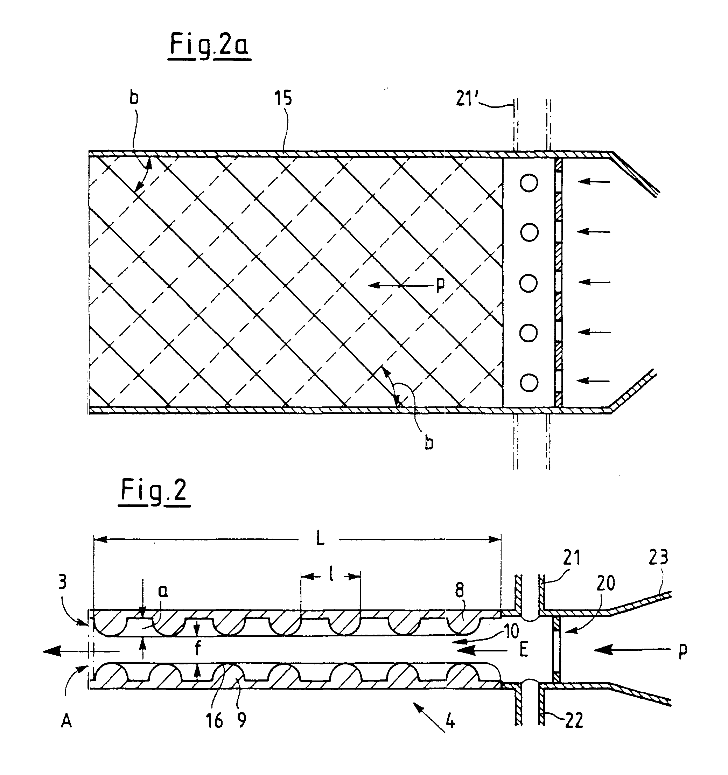

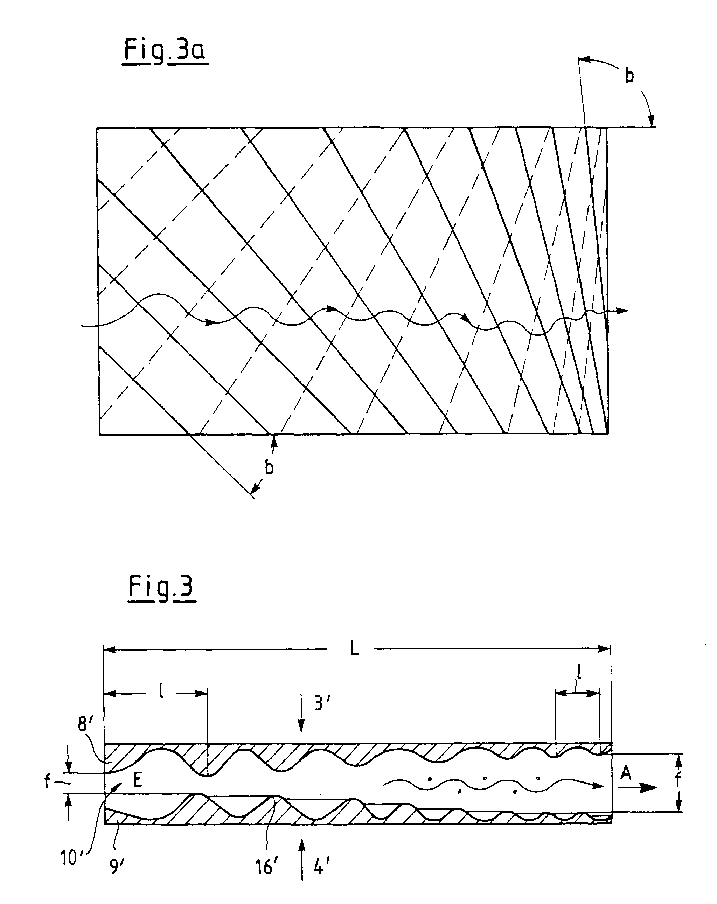

Der Mischer der Figur 2 hat zwei einander gegenüberliegende, den Strömungskanal 10 mit Eintrittsende E und Austrittsende A begrenzende Injektorplatten 3 und 4 mit den Erhebungen 8 bzw. 9. Die Erhebungen sind praktisch als Stege ausgeführt und verlaufen unter einem Winkel b, der von einer Seitenwand 15 - also parallel zur Strömungsrichtung durch den Mischer - aus gegen die Strömungsrichtung p gezogen ist zwischen 10 und 90°, vorzugsweise zwischen 20 und 80°. Dieser Winkel kann jedoch vom Eintrittsende E zum Austrittsende A mehr und mehr zunehmen, vorzugsweise zwischen 30 und 90° (siehe Fig. 3a).

In diesem Fall hat der Mischer Zufuhrkanäle 21 und 22 für die Luft, die hinter einer Blende 20 des Zufuhrkanals 23 an diesen angeschlossen sind. Es können stattdessen auch ein oder zwei seitliche - strichpunktiert angedeutete - Zufuhrkanäle 21' für Preßluft vorgesehen sein.

Der Abstand f zwischen den die Kuppen der Erhebungen berührenden Ebenen hat ein bestimmtes Verhältnis zur Höhe a der Erhebungen im folgenden Bereich
0,1 ≤ f/a ≤ 10, vorzugsweise 1 ≤ f/a ≤ 10.

In Figur 3 sind zwei Injektorplatten 3' und 4' dargestellt, bei denen die Erhebungen 8',9' vom Eintrittsende E zum Austrittsende A hin immer kleiner werden, während der Abstand f der die benachbarten Erhebungen berührenden Ebene zum Austrittsende A hin entsprechend größer wird. Entsprechend nimmt hier auch die Wellenlänge l der Erhebungen vom Eintrittsende E zum Austrittsende A hin ab. Hingegen ist im Fall von Figur 1 der gegenseitige Abstand der Erhebungen l konstant. Der Wert des Verhältnisses der Gesamtlänge L des Mischers zum gegenseitigen Abstand l der Kuppen der Erhebungen kann vorzugsweise in dem folgenden Bereich liegen
5 ≤ L/I ≤ 100.

Das Verhältnis des gegenseitigen Abstandes l der Kuppen 16 der Erhebungen zur Höhe a der Erhebungen kann in dem folgenden Bereich liegen
1 ≤ l/a ≤ 10.

Im Fall von einem Wellenzug, den die Erhebungen 3' und 4' bilden, ist natürlich die Länge l die Wellenlänge λ. Praktisch liegt der Wert für die Höhe bzw. maximale Höhe der Erhebungen 8,9 bzw. 8', 9' zwischen 4 und 20mm.

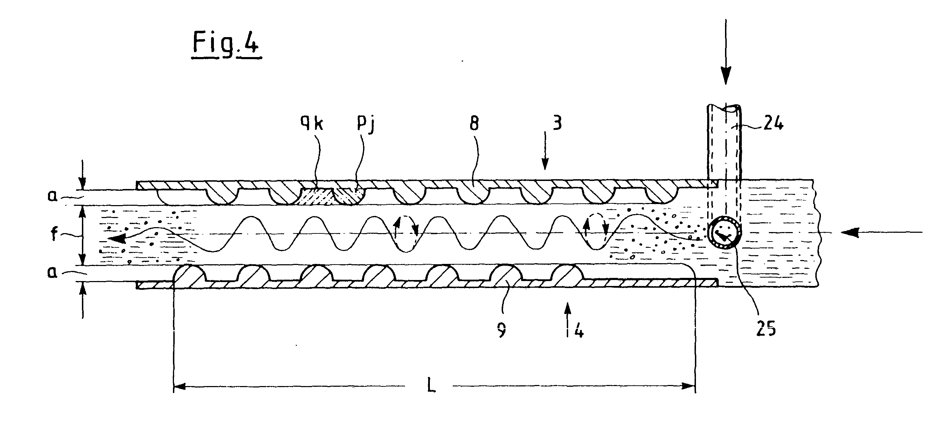

In Figur 4 ist eine ähnliche Ausführungsform wie in Figur 1 gezeigt, wobei hier nur die Luftzufuhr auf andere Weise erfolgt. Das Zufuhrrohr mit den Austrittsöffnungen 25 für die Luft ist mit 24 angegeben.

Grundsätzlich ist zu sagen, daß die Zahl der Platten und damit der durch diese gebildeten Kanäle im Sinne einer kostengünstigen Fertigung relativ klein sein sollte, so daß im allgemeinen höchstens vier Platten mit dazwischen gebildeten, zueinander parallelen Kanälen von drei an der Zahl ausreichend sein müßte. Bevorzugt ist in dieser Hinsicht natürlich die Anordnung mit nur zwei Platten und einem zwischen diesen gebildeten Kanal.

Es ist ja schon erläutert worden, daß bestimmte Formen der Erhebungen angewendet werden sollten. Weiter ist wichtig der Querschnitt der Erhebungen in Bezug auf die Längsachse der Kanäle oder Platten, also die Richtung zwischen Eintritt und Austritt der Kanäle. Bezeichnet man die Größe des Querschnitts der Erhebungen mit pⱼ und die Größe des Querschnitts der Zwischenräume zwischen benachbarten Erhebungen - in derselben Richtung genommen - mit qₖ, (siehe Fig. 4), so ist das Verhältnis zwischen beiden pⱼ/qₖ als mindestens 0,5 zu wählen. Über die gesamte Platte gesehen ist dieser Grenzwert auch für das Verhältnis der Summe des Querschnitts aller Erhebungen zur Summe des Querschnittes aller Zwischenräume zu nehmen. Ferner ist es günstig, wenn die Summe aller dieser Querschnitte je Platte und Kanal (d.h. je Plattenseite) größer als 4000mm²/m ist. Der minimale Abstand zwischen zwei benachbarten Erhebungen benachbarter Platten beträgt 5mm, vorzugsweise 8mm.

Es hat sich herausgestellt, daß die Strömungsgeschwindigkeit - bezogen auf den lichten Querschnitt des jeweiligen Kanals (Breite desselben mal Abstand f der Erhebungen) - größer sein muß als 3m/s. Vorzugsweise liegt sie im Bereich zwischen 6 und 10m/s. Der erwähnte Plattenabstand dient auch dazu, den Druckverlust relativ klein zu halten, der möglichst nicht 1 bar übersteigen sollte.

Der Plattenabstand beeinflußt in starkem Maß das Größenspektrum der entstehenden Luftblasen. Je nach Faserstoffart und Größe der Druckfarbenpartikel sind unterschiedliche Abstände notwendig, um eine optimale Druckfarbenentfernung zu erhalten. Bei einem breiten Größenspektrum der Druckfarbenpartikel ist es vorteilhaft, in mehreren aufeinander folgenden Mischkanälen mit jeweils unterschiedlichem Abstand f auch entsprechende Luftblasenspektren zu erzeugen. Dabei ist es günstig, zunächst große Luftblasen und dann mehr kleinere Luftblasen zu erzeugen. Das bedeutet andererseits, daß der Abstand f zwischen den Erhebungen der Platten von Plattenpaar oder Plattengruppe zu anschließender Plattengruppe immer kleiner wird. Günstige Werte liegen für f zwischen 10 und 50mm und für a zwischen 4 und 20mm.

Es ist schon darauf hingewiesen worden, daß, um einen sehr guten Reinigungseffekt zu erzielen, auch der Ausbildung des Flotationszyklons größte Aufmerksamkeit zu schenken ist. Es geht ja hier darum, in großem Maße die feinen Partikel abzuscheiden, die ja an den sehr feinen Luftbläschen angelagert sind. Bei der erfindungsgemäßen Ausbildung des Flotationszyklons strömen diese in verstärktem Maße dem im Zyklon gebildeten Wirbelkern zu, so daß in Bezug auf diese feinen Partikel ein hoher Reinigungsgrad erreicht wird. Dadurch wird es wie gesagt möglich, die gesamte Stufenzahl der Flotation mit entsprechendem Kostenvorteil erheblich zu verringern.

Nachfolgend werden Ausführungsformen des Flotationszyklons, wie er vorzugsweise in der Flotationsanlage benutzt werden kann, erläutert.

In Figur 5 ist der mittlere Trennteil 11 des Flotationsbehälters, in welchem die Trennung von Luft und Suspension erfolgt, zusammengesetzt aus einem konischen Teil 11' in Form eines Kegelstumpfes und einem zylindrischen Teil 11", der auf den konischen Teil aufgesetzt ist. Die tangentiale Zuströmung ist mit 32 und der daran angeschlossene Einströmteil, der ebenfalls zylindrisch ausgebildet ist, mit 34 bezeichnet. Der Ausströmteil 33 ist ebenfalls zylindrisch und hat eine tangentiale Ausströmung 35. In den zylindrischen Teil 11" des Trennteils 11 ragt von oben ein Tauchrohr 14 zentral hinein, und zwar um eine Strecke g, die zwischen dem 0,8-bis 1,2-fachen des Außendurchmessers d des Tauchrohrs 14 beträgt. Für das Verhältnis der Längen (Höhen) des konischen Teils 11' und des zylindrischen Teils 11" des Trennteils 11 l₁/l₂ kann der Bereich zwischen 0,2 und 1 gewählt werden. Die Gesamtlänge L des Trennteils 11 kann zwischen dem 2,5- und 3,5-fachen des Durchmessers D₂ des zylindrischen Teils 1" betragen. Das Verhältnis zwischen dem maximalen Durchmesser D₁ und dem minimalen Durchmesser D₂ des Trennteils 11 kann zwischen 1,2 und 3 vorzugsweise betragen. Die Gesamtlänge des Trennteils l wird praktisch zwischen 0,8 und 2,0 m liegen. Die letzteren Angaben haben für andere Bauformen dieser Flotationseinrichtungen, die in anderen Figuren dargestellt sind, auch Gültigkeit.

Die Wirkungsweise des erfindungsgemäßen Zyklons ist insofern günstig, als im oberen Teil 11" des Trennteils 11 mit dem kleinen Durchmesser sich eine sehr hohe Zentrifugalbeschleunigung einstellt, so daß auch kleine Blasen aufsteigen und mit den daran anhaftenden Schmutzpartikeln abgeschieden werden. Die Geschwindigkeit ist jedoch so einzustellen, daß die an den Blasen anhaftenden Druckfarbenpartikel nicht durch zu hohe Scherkräfte abgelöst werden.

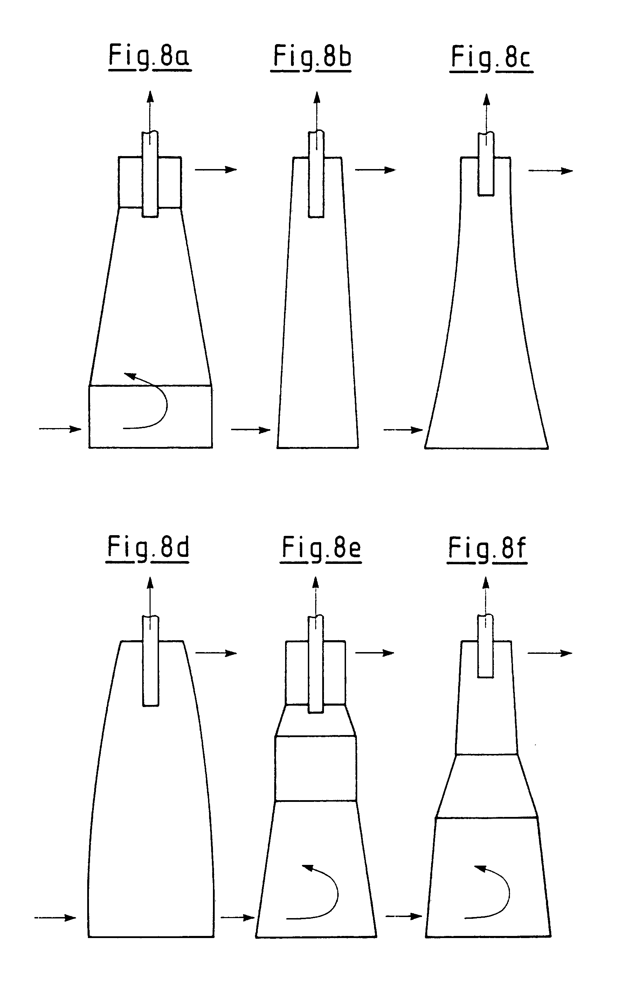

Unterstützt durch die axiale Strömungskomponente der Suspension von unten nach oben wird der Schaum durch den Behälter in Richtung Entgasungsöffnung, d.h. Tauchrohr, transportiert. Infolge des inneren Überdruckes stellt sich ein kontinuierlicher Schaumaustrag ein. Vorzugsweise ist die beschriebene Anordnung anzuwenden, weil nach Durchtritt durch den engen Teil 11" des Trennteils 11 wieder eine Durchmesservergrößerung erfolgt und die Suspension verzögert wird. Ähnliche Auslaßteile sind auch bei den anderen Varianten, insbesondere der Figuren 8a-d vorteilhaft anzuwenden. Vorteilhaft kann auch das Tauchrohr 14 innerhalb des Trennteils oder auch Ausströmteils verschiedene Bohrungen erhalten, um eine Nachentgasung unter Ausnutzung der Sekundärströmung zu erreichen. Die Zulaufgeschwindigkeit des Suspensions-Luft-Gemisches sollte zwischen 0,5 und 5 m/s und die Axialgeschwindigkeit durch den Zyklon zwischen 0,1 und 1 m/s betragen.

Der Flotationsbehälter der Figuren 6 und 7 hat eine andere Einströmung 36, nämlich in Form einer Einlaufspirale.

Die Figuren 8a-8f zeigen weitere Formen des Abscheideteils, und zwar mit sehr kleinem zylindrischen, oberen Teil, als durchgehend kegelstumpfförmig ausgebildet, mit einer konkaven oder einer konvexen Form und schließlich als eine Kombination aus zylindrischen und konischen Abschnitten.

## Patentansprüche

1. Vorrichtung zum selektiven Flotieren, insbesondere nach Druckfarben-Teilchengrößen, von Altpapier-Suspensionen;
1.1 mit einem Flotationszyklon (1.1) als erster Flotationsstufe zum Abscheiden besonders feiner Teilchen;
1.2 der Flotationszyklon (1.1) weist einen zylindrischen Einströmteil (34) auf, an den in Strömungsrichtung ein sich konisch verjüngernder Trennteil (11') und sodann wieder ein zylindrischer Ausströmteil (33) angeschlossen sind;
1.3 mit einem dem Flotationszyklon (1.1) vorgeschalteten statischen Mischer (3.1) zum Mischen von Flotationstrübe mit Gas in Form kleiner Bläschen;
1.4 der Flotationszyklon (1.1) ist derart ausgebildet, daß die Flotationstrübe unter Bildung eines Zentrifugalfeldes aufsteigt, dessen Stärke zwischen 5 und 100 g liegt;
1.5 der Flotationszyklon (1.1) weist einen Schaumabzug auf;
1.6 der statische Mischer (3.1) weist einen Kanal (10, 10') auf, dessen Wände mit Vorsprüngen (8, 8'; 9, 9') versehen sind;
1.7 dem Flotationszyklon (1.1) ist wenigstens eine zweite Flotationsstufe zum Abscheiden größerer Partikel nachgeschaltet.

2. Einrichtung nach Anspruch 1, **dadurch gekennzeichnet, daß** aus dem Flotationszyklon (1.1) und einer mindestens eine Flotationszelle aufweisenden Flotationsmaschine (2) eine Primärstufe gebildet ist, der zur Flotation des Schaumes der letzteren Flotationsmaschine (2) oder des gesamten Primärschaumes eine Sekundärstufe nachgeschaltet ist.

3. Einrichtung nach Anspruch 2, **dadurch gekennzeichnet, daß** als Mischeinrichtung für Gas und Trübe der Sekundär-Flotationsstufe ein statischer Mischer (3.2) und als Trenneinrichtung eine konventionelle Flotationszelle (1.2) dient.

4. Einrichtung nach einem der Ansprüche 1 bis 3, **dadurch gekennzeichnet, daß** der statische Mischer (3.1) unmittelbar das Eingangsteil des Flotationszyklons (1.1) und mit diesem unmittelbar verbunden ist.

5. Einrichtung nach Anspruch 4, **dadurch gekennzeichnet, daß** der Ausgang für die gereinigte Trübe der Sekundärstufe mit dem Eingangsbereich der dem Flotationszyklon (1.1) nachgeschalteten, zweiten Flotationsstufe in der Primärstufe (2) verbunden ist.

6. Einrichtung nach einem der Ansprüche 1 bis 5, **dadurch gekennzeichnet, daß** zwei einander gegenüberliegende Begrenzungswände (3,4; 3',4') des Strömungskanals, die diesen bei ziemlich flacher Ausbildung desselben hauptsächlich begrenzen, abwechselnd mit den Erhebungen (8,9; 8',9') bzw. Vertiefungen versehen sind, die je Begrenzungswand (3,4; 3',4') zueinander parallel sind oder von Erhebung zu Erhebung eine Winkelabweichung von höchstens 8° in ihrem Verlauf zueinander haben und daß die Erhebungen der beiden Begrenzungswände jedes Kanals zueinander sich kreuzend verlaufen.

7. Einrichtung nach einem der Ansprüche 1 bis 6, **dadurch gekennzeichnet, daß** der Neigungswinkel der Erhebungen (3, 4; 3', 4') in bezug auf die Durchströmungsrichtung der Suspension durch den jeweiligen Kanal zwischen 10 und 85° beträgt.

8. Einrichtung nach einem der Ansprüche 1 bis 7, **dadurch gekennzeichnet, daß** der Winkel b, den die Erhebungen (3, 4; 3', 4') mit der generellen Strömungsrichtung der Suspension im jeweiligen Kanal bilden, von Erhebung zu Erhebung oder bezogen auf Gruppen aufeinanderfolgender Erhebungen mehr und mehr in der genannten Strömungsrichtung in einem Bereich zwischen 20 und 85° ansteigt.

9. Einrichtung nach einem der Ansprüche 1 bis 8, **dadurch gekennzeichnet, daß** der Querschnitt pⱼ der Erhebungen (8,8'; 9,9') der Platten (3,3'; 4,4') oder Zylinder (21,22) zu dem entsprechenden Querschnitt qₖ der Zwischenräume zwischen den Erhebungen - in Strömungsrichtung genommen - sich mindestens wie 0,5:1 verhält.

10. Einrichtung nach einem der Ansprüche 1 bis 9, **dadurch gekennzeichnet, daß** die Summe der Querschnitte pⱼ der Erhebungen (8,8'; 9,9') der Platten (3,3'; 4,4') oder Zylinder (21,22) addiert zur Summe der entsprechenden Querschnitte qₖ der Zwischenräume zwischen den Erhebungen mindestens 4000 mm²/m Länge L der Platten (3,3'; 4,4') oder Zylinder (21,22) - jeweils gemessen in Richtung zwischen Einlaß- und Auslaßende (E bzw. A) - beträgt.

11. Einrichtung nach einem der Ansprüche 1 bis 10, **dadurch gekennzeichnet, daß** der Flotationszyklon (1.1) in seinem Mittelteil einen sich nach oben hin stetig oder gleichmäßig verjüngenden oder abschnittweise stetig oder gleichmäßig sich verjüngenden Trennteil (11) aufweist, wobei das Durchmesserverhältnis (D₁/D₂) von größtem Durchmesser (D₁) zu kleinstem Durchmesser (D₂) zwischen 1,2 und 3 beträgt.

12. Einrichtung nach Anspruch 11, **dadurch gekennzeichnet, daß** das Verhältnis des Durchmessers (d) des Tauchrohrs (14) zum kleinsten Durchmesser (D₂) des Trennteils (1) (d/D₂) zwischen 0,3 und 0,5 beträgt.

13. Einrichtung nach einem der Ansprüche 11 oder 12, **dadurch gekennzeichnet, daß** die Eintauchtiefe (g) des Tauchrohrs (14) in den Trennteil das 0,8- bis 1,2-fache des Durchmessers (d) des Tauchrohrs (14) beträgt, wobei (d) der Außendurchmesser des Tauchrohrs (14) ist.

14. Einrichtung nach einem der Ansprüche 11-13, **dadurch gekennzeichnet, daß** der Einströmteil (34) zylindrisch ausgebildet ist und einen Durchmesser aufweist, der mindestens gleich dem maximalen Durchmesser (D₁) des Trennteils (11) ist.

15. Flotationseinrichtung nach einem der Ansprüche 11-14, **dadurch gekennzeichnet, daß** ein Abströmteil (33) vorgesehen ist, dessen Durchmesser mindestens 10 % größer ist als der minimale Durchmesser (D₂) des Trennteils (11).

## Claims

1. Device for the selective flotation, in particular according to printing ink particle sizes, of waste paper suspensions;
1.1 with a flotation cyclone (1.1) as first flotation stage for separating particularly fine particles;
1.2 the flotation cyclone (1.1) has a cylindrical inflow part (34) to which a conically tapering separating part (11') is attached in flow direction and to which a cylindrical outflow part (33) is then attached again;
1.3 with a static mixer (3.1) connected upstream from the flotation cyclone (1.1) for mixing flotation slurry with gas in the form of small bubbles;
1.4 the flotation cyclone (1.1) is designed in such a way that the flotation slurry rises while forming a centrifugal field, the weight of which is between 5 and 100 g;
1.5 the flotation cyclone (1.1) has a foam discharge;
1.6 the static mixer (3.1) has a duct (10, 10'), the walls of which are provided with projections (8, 8'; 9, 9');
1.7 at least one second flotation stage for separating larger particles is connected downstream from the flotation cyclone (1.1).

2. Device according to claim 1, **characterised in that**, a primary stage is formed from the flotation cyclone (1.1) and a flotation machine (2) having at least one flotation cell, downstream of which primary stage a secondary tage is connected for the flotation of the foam from the latter flotation machine (2) or the total primary foam.

3. Device according to claim 2, **characterised in that** a static mixer (3.2) serves as a mixing device for gas and slurry from the secondary flotation stage and a conventional flotation cell (1.2) serves as a separating device.

4. Device according to any one of claims 1 to 3, **characterised in that** the static mixer (3.1) is the inlet part of the flotation cyclone (1.1) and is directly connected thereto.

5. Device according to claim 4, **characterised in that** the outlet for the purified slurry from the secondary stage is connected to the inlet region of the second flotation stage connected downstream from the flotation cyclone (1.1) in the primary stage (2).

6. Device according to any one of claims 1 to 5, **characterised in that** two delimiting walls (3, 4; 3', 4'), opposing one another, of the flow duct which delimit the flow duct when it is fairly flat in design, are provided alternately with the elevations (8, 9; 8', 9') or recesses which are parallel to one another for each delimiting wall (3, 4; 3', 4') or from elevation to elevation have an angle deviation of a maximum of 8° in their course relative to one another and in that the elevations of the two delimiting walls of each duct intersect one another.

7. Device according to any one of claims 1 to 6, **characterised in that** the angle of incline of the elevations (3, 4; 3', 4') in relation to the through-flow direction of the suspension through the respective duct is between 10 and 85°.

8. Device according to any one of claims 1 to 7, **characterised in that** the angle b which the elevations (3, 4; 3', 4') form with the general flow direction of the suspension in the respective duct, increases further and further in the above-mentioned flow direction in a range between 20 and 85° from elevation to elevation or with respect to groups of elevations following on from one another.

9. Device according to any one of claims 1 to 8, **characterised in that** the cross-section pⱼ of the elevations (8, 8'; 9, 9') of the plates (3, 3'; 4, 4') or cylinders (21, 22) has a ratio to the corresponding cross-section qₖ of the gaps between the elevations - taken in flow direction - of at least 0.5:1.

10. Device according to any one of claims 1 to 9, **characterised in that** the sum of the cross-sections pⱼ of the elevations (8, 8'; 9, 9') of the plates (3, 3'; 4, 4') or cylinders (21, 22) added to the sum of the corresponding cross-sections qₖ of the gaps between the elevations is at least 4000 mm²/m length L of the plates (3, 3'; 4, 4') or cylinders (21, 22) - measured in the direction between inlet and outlet end (E or A) respectively.

11. Device according to any one of claims 1 to 10, **characterised in that** the flotation cyclone (1.1) has, in its central part, a separating part (11) which tapers upwards constantly or uniformly or, in portions, constantly or uniformly, wherein the diameter ratio (D₁/D₂) of the largest diameter (D₁) to the smallest diameter (D₂) is between 1.2 and 3.

12. Device according to claim 11, **characterised in that** the ratio of the diameter (d) of the immersion pipe (14) to the smallest diameter (D₂) of the separating part (1) (d/D₂) is between 0.3 and 0.5.

13. Device according to any one of claims 11 or 12, **characterised in that** the immersion depth (g) of the immersion pipe (14) into the separating part is 0.8 to 1.2 times the diameter (d) of the immersion pipe (14), (d) being the external diameter of the immersion pipe (14).

14. Device according to any one of claims 11 to 13, **characterised in that** the inflow part (34) is cylindrical in design and has a diameter which is at least equal to the maximum diameter (D₁) of the separating part (11).

15. Flotation device according to any one of claims 11 to 14, **characterised in that** an outflow part (33) is provided, the diameter of which is at least 10% greater than the minimum diameter (D₂) of the separating part (11).

## Revendications

1. Dispositif de flottaison sélective, en particulier d'après les tailles de particules d'encre d'impression, de suspension de vieux papier ;
1.1 avec un cyclone de flottaison **(1.1)** faisant office de premier étage de flottaison, pour effectuer la séparation des particules particulièrement fines ;
1.2 le cyclone de flottaison **(1.1)** présente une partie d'entrée d'écoulement cylindrique **(34)**, à laquelle sont raccordées, dans la direction de l'écoulement, une partie de séparation **(11')** s'effilant de façon conique, puis de nouveau une partie de sortie d'écoulement **(33)** cylindrique ;
1.3 avec un mélangeur statique **(3.1)** mis en circuit en amont du cyclone de flottaison **(1.1),** pour mélanger des boues ou pulpes de flottaison avec du gaz se présentant sous la forme de petites bulles ;
1.4 le cyclone de flottaison **(1.1)** est réalisé de manière que la boue de flottaison monte en formant un champ centrifuge, dont l'intensité est comprise entre 5 et 100 g ;
1.5 le cyclone de flottaison **(1.1)** présente une extraction des mousses ;
1.6 le mélangeur statique **(3.1)** présente un canal **(10, 10')** dont les parois sont munies de saillies **(8,8'; 9,9') ;**
1.7 un deuxième étage de flottaison est mis en circuit en aval du cyclone de flottaison **(1.1)**, pour effectuer la séparation des particules plus grosses.

2. Dispositif selon la revendication 1, **caractérisé en ce que**, à partir du cyclone de flottaison **(1.1)** et d'une machine de flottaison **(2)** présentant au moins une cellule de flottaison, est formé un étage primaire, en aval duquel est mis en circuit un étage secondaire, pour assurer la flottaison de la mousse de la dernière machine de flottaison **(2)** ou de l'ensemble de la mousse primaire.

3. Dispositif selon la revendication 2, **caractérisé en ce qu'**un mélangeur statique **(3.2)** est utilisé comme dispositif de mélange pour le gaz et la boue de l'étage de flottaison secondaire, et une cellule de flottaison **(1.2)** classique est utilisée comme dispositif de séparation.

4. Dispositif selon l'une des revendications 1 à 3, **caractérisé en ce que** le mélangeur statique **(3.1)** forme directement la partie d'entrée du cyclone de flottaison **(1.1)** et est directement relié à celui-ci.

5. Dispositif selon la revendication 4, **caractérisé en ce que** la sortie des boues épurées de l'étage secondaire est reliée, dans l'étage primaire **(2)**, à la zone d'entrée du deuxième étage de flottaison, mis en circuit en aval du cyclone de flottaison **(1.1)**.

6. Dispositif selon l'une des revendications 1 à 5, **caractérisé en ce que** deux parois de délimitation **(3,4 ; 3',4'),** en regard l'une de l'autre, du canal d'écoulement, qui délimitent principalement celui-ci dans le cas où sa configuration est relativement plate, sont alternativement munies de bossages **(8,9 ; 8',9')** ou de creux, qui sont parallèles entre eux pour chaque paroi de délimitation **(3,4 ; 3',4'),** ou bien, évolue, d'un bossage à un autre bossage, en faisant un écart angulaire maximal de 8°, et en ce que les bossages des deux parois de délimitation de chaque canal s'étendent en se croisant mutuellement.

7. Dispositif selon l'une des revendications 1 à 6, **caractérisé en ce que** l'angle d'inclinaison des bossages **(3,4 ; 3',4')** par rapport à la direction de passage de l'écoulement de la suspension par le canal respectif est compris entre 10 et 85 °.

8. Dispositif selon l'une des revendications 1 à 7, **caractérisé en ce que** l'angle b que forment les bossages **(3,4 ; 3',4')** avec la direction d'écoulement générale de la suspension dans le canal respectif, d'un bossage à un autre bossage ou bien en se référant à des groupes de bossage successifs, augmente de plus en plus en allant dans la direction d'écoulement citée, dans les limites d'une plage comprise entre 20 et 85°.

9. Dispositif selon l'une des revendications 1 à 8, **caractérisé en ce que** la section transversale pj des bossages **(8, 8' ; 9, 9')** des plaques **(3,3' ; 4,4')** ou des cylindres **(21, 22),** par rapport à la section transversale qk correspondante des espaces intermédiaires existant entre les bossages - prise dans la direction de l'écoulement - est dans un rapport d'au moins 0,5:1.

10. Dispositif selon l'une des revendications 1 à 9, **caractérisé en ce que** la somme de la section transversale pj des bossages **(8,8' ; 9,9'),** des plaques **(3,3' ; 4,4')** ou des cylindres **(21, 22),** ajoutée à la somme des sections transversales qk correspondantes des espaces intermédiaires existant entre les bossages, est d'au moins 4000 mm²/m de longueur L des plaques **(3,3' ; 4,4')** ou des cylindres **(21, 22)** - chaque fois mesurée dans la direction entre l'extrémité d'admission et l'extrémité d'évacuation (**E** ou **A**).

11. Dispositif selon l'une des revendications 1 à 10, **caractérisé en ce que** le cyclone de flottaison **(1.1)** présente dans sa partie médiane une partie de séparation **(11),** s'effilant vers le haut de façon constante ou régulière, ou bien allant en s'effilant par tronçons vers le haut de façon constante ou régulière, le rapport des diamètres **(D**_{**1**}**/D**_{**2**}**),** entre le diamètre maximal **(D**_{**1**}**)** et le diamètre minimal **(D**_{**2**}**),** étant compris entre 1,2 et 3.

12. Dispositif selon la revendication 11, **caractérisé en ce que** le rapport entre les diamètres **(d)** du tube plongeur **(14)** et le diamètre minimal **(D**_{**2**}**)** de la partie de séparation (1), **(d/ D2)**, est compris entre 0,3 et 0,5.

13. Dispositif selon la revendication 11 ou 12, **caractérisé en ce que** la profondeur d'immersion **(g)** du tube plongeur **(14)** dans la partie de séparation est de 0,8 à 1,2 fois le diamètre d du tube plongeur **(14), (d)** étant le diamètre extérieur du tube plongeur **(14)**.

14. Dispositif selon les revendications 11 à 13, **caractérisé en ce que** la partie d'entrée d'écoulement **(34)** est de configuration cylindrique et présente un diamètre au moins égal au diamètre maximal **(D**_{**1**}**)** de la partie de séparation **(11);**

15. Dispositif de flottaison selon les revendications 11 à 14, **caractérisé en ce qu'**est prévue une partie d'écoulement **(33)**, dont le diamètre est d'au moins 10 % supérieur au diamètre minimal **(D**_{**2**}**)** de la partie de séparation **(11)**.
